# FASCICULE DE BREVET EUROPEEN

(11) **EP 1 753 294 B1**
(45) Date de publication et mention de la délivrance du brevet: **20.02.2008**
(21) Numéro de dépôt: 05762472.8
(22) Date de dépôt: 10.05.2005
(51) Int. Cl.: A21B 1/26, A21B 1/22

(54) **FOUR DE CUISSON DE PRODUITS DE BOULANGERIE, VIENNOISERIE, PATISSERIE OU ANALOGUE**
BACKOFEN FÜR BROT, BACKWAREN, FEINGEBÄCK ODER ÄHNLICHES
COOKING OVEN FOR BREAD, PATISSERIE AND PASTRIES OR SIMILAR

(30) Priorité: 01.06.2004 FR 0451081
(43) Date de publication de la demande: 21.02.2007
(73) Titulaire: Mecatherm, Société Anonyme, 67130 Barembach (FR)
(72) Inventeur: VOEGTLIN, René, décédé (FR)
(74) Mandataire: Rhein, Alain
(86) Numéro de dépôt international: PCT/FR2005/050310
(87) Numéro de publication internationale: WO 2005/117593

(56) Documents cités:
- EP-A- 0 401 173
- WO-A-95/32401
- DE-C- 361 768
- US-A- 2 688 808
- US-A- 3 384 737
- US-A- 4 357 523
- US-A- 4 464 406
- US-A- 4 529 379
- US-A- 4 951 648
- US-A1- 2003 056 658

## Description

L'invention concerne un four de cuisson de produits de boulangerie, viennoiserie, pâtisserie ou analogue, comportant au moins une enceinte de cuisson, avec une sole mobile ou fixe, sur laquelle reposent lesdits produits en cours de cuisson, soit directement, soit au travers d'un support de cuisson adapté, tel qu'une plaque, un filet ou un moule de cuisson, sous ladite sole étant ménagés des moyens de chauffage par rayonnement de la sole, dits plaque chauffante de sole.

La présente invention entre dans le domaine des fours de cuisson de produits de boulangerie, viennoiserie pâtisserie ou analogue.

On connaît d'ores et déjà des fours de cuisson répondant à la description ci-dessus dont le fonctionnement est discontinu ou continu. Dans le premier cas, le four est capable de contenir une certaine quantité de produits dénommée charge. Elle en est extraite en fin de cuisson, laissant place à la cuisson d'une nouvelle charge. Dans le cas d'un four de cuisson continue, les produits sont acheminés au travers de l'enceinte de cuisson par des moyens d'acheminement appropriés entre une entrée et une sortie, le temps de transit correspondant au temps de cuisson.

Pour l'enfournement et l'évacuation d'une charge de produits dans des fours à fonctionnement discontinu ou encore pour le transit de ces produits au travers de fours à fonctionnement continu, la sole de l'enceinte de cuisson, sur laquelle repose lesdits produits, soit directement, soit au travers d'un support de cuisson adapté, tel qu'une plaque, un filet ou un moule de cuisson, peut être conçue mobile, par exemple sous forme d'un plateau coulissant, notamment dans le cas d'une sole dite sortante, ou d'un tapis de cuisson approprié. Ce tapis peut être de type métallique ou en matériau synthétique ou encore à lames articulées en pierre ou en métal.

Les fours plus particulièrement visés par la présente invention sont ceux où les produits à cuire sont en contact direct ou par leur support de cuisson avec la sole de l'enceinte de cuisson, sole soumise à des moyens de chauffage adaptés.

En particulier, sous cette sole, peuvent être implantés des résistances chauffantes, des conduits de fluide chauffant ou tout autre moyen de production de chaleur.

Dans la suite de la description, ces moyens de chauffage s'étendant au moins partiellement sous la sole seront dénommés plaque chauffante de sole.

Ainsi, les produits sont cuits en partie par conduction au travers de cette sole, sachant qu'ils subissent par ailleurs une cuisson par chauffage rayonnant et/ou par convexion.

Le rayonnement résulte de la dispersion de la chaleur à partir de la sole et de la voûte de l'enceinte de cuisson chargées en chaleur. A ce propos, la voûte est elle aussi équipée de moyens de chauffage.

Ces produits peuvent aussi être cuits par convexion par un fluide caloporteur mis en mouvement dans l'enceinte de cuisson. Certains fours mettent en application simultanément ces trois modes de chauffage ; conduction, rayonnement, convexion, pour assurer la cuisson des produits. En particulier, cela consiste dans un four comme décrit précédemment, comprenant une sole et une voûte chauffées, à soumettre l'air de l'enceinte de cuisson à des moyens de brassage adaptés. Un tel dispositif est décrit par le brevet US 4.529.379.

Lorsque les produits sont placés directement ou au travers de support de cuisson sur la sole, les calories sont directement absorbées par les produits dans la zone de contact de sorte que localement la sole doit se recharger en énergie calorifique par l'intermédiaire de la plaque chauffante de sole pour que se poursuive l'opération de cuisson. Un réchauffement de la sole par simple rayonnement au travers de ladite plaque chauffante de sole présente une certaine inertie ce qui a pour conséquence le ralentissement de l'opération de cuisson par conduction et par rayonnement au travers de la sole. Le phénomène est accentué lorsque les produits reposent sur cette sole au travers de supports de cuisson qui, bien qu'étant généralement ajourés, créent une barrière au chauffage par rayonnement et augmentent l'inertie du transfert des calories par conduction de la sole vers les produits.

Le résultat est une cuisson qui ne s'opère pas dans des conditions identiques sur le dessus et les flancs des produits par rapport au-dessous de ces derniers, en contact direct ou indirect avec la sole.

La présente invention tente de répondre à cet inconvénient en proposant une solution qui permet de pallier ces problèmes d'inertie de rechargement en énergie calorifique d'une sole ou de transfert de calorie en direction des produits.

Dans le cadre d'une démarche inventive, il a été imaginé la possibilité de combiner au niveau de la sole un chauffage par conduction et par rayonnement avec un chauffage par convexion.

Pour ce faire l'invention porte sur un four de cuisson de produits de boulangerie, viennoiserie, pâtisserie ou analogue, comportant au moins une enceinte de cuisson avec une sole mobile ou fixe, sur laquelle reposent lesdits produits en cours de cuisson, soit directement, soit au travers d'un support de cuisson adapté, tel qu'une plaque, un filet ou un moule de cuisson, sous ladite sole étant ménagés des moyens de chauffage par rayonnement de la sole, dits plaque chauffante de sole, caractérisé en ce qu'entre la sole et les moyens de chauffage de sole est ménagé un espace de circulation en circuit fermé de fluide de chauffage par convexion, ladite sole étant conçue perméable pour un complément de chauffage par convection des produits au travers de cette dernière, ledit fluide de chauffage par convexion léchant les produits au travers de ladite sole sans pour autant pénétrer dans l'enceinte de cuisson.

De plus, la sole est conçue apte à être chauffée par rayonnement au travers de l'espace de circulation de fluide de chauffage par convexion par ladite plaque chauffante de sole.

Avantageusement ladite sole est définie par une plaque en tout ou partie ajourée ou par un tapis de cuisson, voire par une grille ou un maillage, entretoisé par rapport à la plaque chauffante de sole.

Selon un mode de réalisation préférentiel, ladite sole, sous forme d'un tapis de cuisson, est supportée par le chant supérieur de glissières s'étendant au-dessus de la plaque chauffante de sole en formant entretoise.

Ainsi lesdites glissières définissent des canaux dans l'espace de circulation de fluide de chauffage par convexion.

Le four de cuisson, selon l'invention, comporte des moyens de mise en circulation fermée du fluide de chauffage par convexion dans ledit espace.

De manière préférentielle, lesdits moyens de mise en circulation comportent avantageusement un dispositif de brassage, des moyens de chauffage dudit fluide et des moyens de canalisation du fluide depuis une bouche d'aspiration à une extrémité de la sole en direction d'une bouche de refoulement à une extrémité opposée de cette sole.

Lesdits moyens de chauffage du fluide sont constitués par la plaque chauffante de sole.

Lesdites glissières s'étendent de manière continue ou discontinue depuis la bouche de refoulement vers la bouche d'aspiration.

Dans un mode particulier de réalisation de l'invention, ladite sole peut être mobile.

Dans ce cas, lesdites glissières sont orientées sensiblement parallèlement au sens de déplacement de ladite sole, et sont légèrement divergentes de part et d'autre du plan médian longitudinal du four et dans le sens de circulation du fluide de chauffage par convexion.

L'invention concerne aussi un dispositif de cuisson constitué de plusieurs modules, chaque module comprenant une enceinte de cuisson, au moins un des modules étant défini par un four de cuisson selon l'invention.

D'autres caractéristiques et avantages de l'invention ressortiront de la description détaillée qui va suivre se rapportant à des exemples de réalisation illustrés dans les figures des dessins en annexe.
- la figure 1 représente une vue schématisée et en coupe d'un mode de réalisation d'un four de cuisson selon l'invention ;
- la figure 2 représente, de manière schématisée, partielle et en perspective, la sole sous forme d'un tapis de cuisson sous lequel est ménagé la plaque chauffante de sole, ainsi que, selon l'invention, un espace de circulation en circuit fermé de fluide de chauffage par convexion;
- la figure 3 représente une vue schématisée et de dessus de la figure 2, le tapis de cuisson ayant été retiré ; et
- la figure 4 représente schématiquement un dispositif de cuisson comprenant plusieurs modules dont certains sont définis par des fours de cuisson selon l'invention.

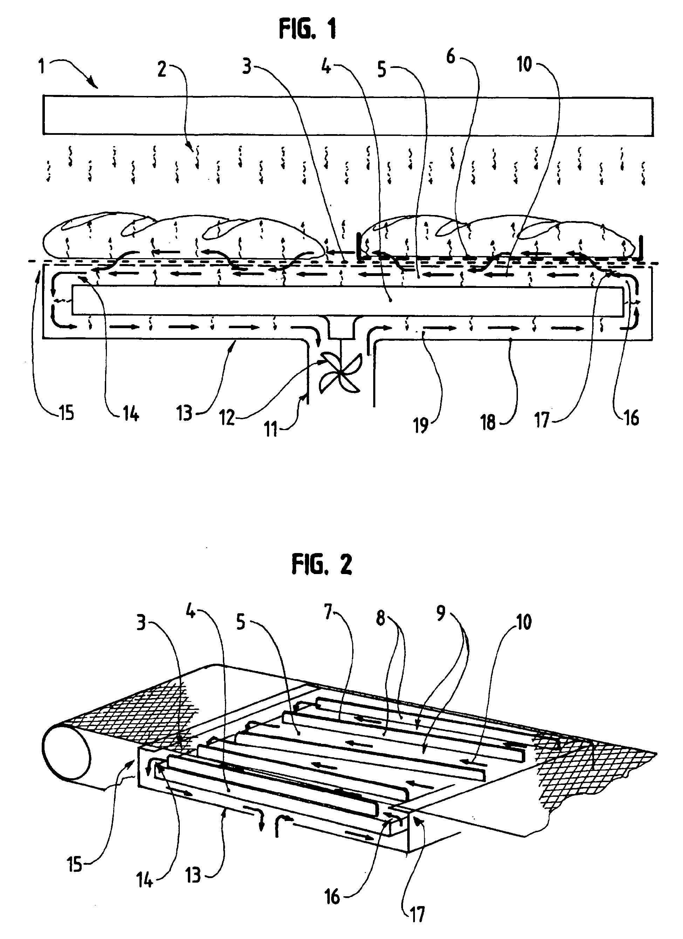

L'invention concerne un four de cuisson 1, visible sur la figure 1, comprenant une enceinte de cuisson 2 pourvue d'une sole 3 et de moyens de chauffage 4 adaptés. Ces derniers s'étendent en tout ou partie sous la sole 3 et seront appelés plaque chauffante de sole 4 dans la suite de la description. Cette plaque chauffante de sole 4 chauffe la sole 3 par rayonnement ou par conduction.

Un chauffage par convexion est ajouté en complément des moyens de chauffe existants. Pour ce faire, un espace 5 est ménagé entre ladite sole 3 et ladite plaque chauffante de sole 4 afin de permettre la circulation en circuit fermé d'un fluide de chauffe par convexion.

Au travers de cette convexion, on accélère le transfert de la chaleur et on vient remédier aux problèmes d'inertie évoqués précédemment.

La sole 3 est conçue apte à être chauffée par rayonnement, par la plaque chauffante de sole 4, au travers de cet espace 5 de circulation de fluide de chauffage par convexion.

La sole 3 est conçue perméable pour permettre un complément de chauffage par convexion des produits qui y repose directement ou au travers de supports de cuisson 6 adaptés. Ces deux solutions ont été représentées schématiquement dans la figure 1.

En particulier, cette sole 3 peut être définie par une plaque en tout ou partie ajourée par des perforations, par exemple dans le cas d'un four à sole dite sortante, ou se présenter, tel que représenté dans la figure 1, sous forme d'un tapis de cuisson, cette sole étant entretoisée par rapport à la plaque chauffante de sole 4.

Dans un mode de réalisation préférentiel, la sole 3, définie par un tapis de cuisson, repose sur le chant supérieur 7 de glissières 8 s'étendant au-dessus de la plaque chauffante de sole 4 en formant entretoises.

On observera que cette conception a pour avantage de maintenir, voire favoriser le chauffage par rayonnement, par la paque chauffante de sole 4, de la sole 3 que définit le tapis de cuisson. Par cet intermédiaire, il est possible d'assurer la cuisson des produits par simple rayonnement au travers de la sole.

Les glissières 8 définissent dans l'espace 5 des canaux de circulation 9 de fluide de chauffage par convexion. Ainsi ces glissières 8 sont orientées sensiblement parallèlement au sens de circulation 10 du fluide de chauffage par convexion sous la sole 3. D'ailleurs, le four de cuisson comporte encore des moyens de mise en circulation fermée 11 du fluide de chauffage par convexion dans ledit espace 5. Ces moyens 11 comportent, tout d'abord, un dispositif de brassage 12, tel qu'un ventilateur ou similaire, ainsi que des moyens de canalisation 13 du fluide depuis une bouche d'aspiration 14, à une extrémité 15 de la sole 3, en direction d'une bouche de refoulement 16, à une extrémité opposée 17 de cette sole 3, en passant au travers dudit dispositif de brassage 12, ainsi que des moyens de chauffage dudit fluide.

Tout particulièrement, ces moyens de chauffage peuvent être constitués par la plaque chauffante de sole 4 à elle seule ou en combinaison avec un dispositif de chauffage additionnel non représenté.

De manière avantageuse, les moyens de canalisation 13 sont définis par la plaque chauffante de sole 4, elle-même, et une enveloppe 18 entourant en tout ou partie cette dernière en définissant un conduit 19 communiquant avec les bouches d'aspiration 14 et de refoulement 16.

Dans ce contexte, lesdites glissières 8 peuvent s'étendre de manière continue ou discontinue depuis la bouche de refoulement 16 vers la bouche d'aspiration 14.

Sous l'impulsion du dispositif de brassage 12 et en raison de la perméabilité de la sole 3, le fluide de chauffage par convexion peut lécher les produits reposant directement sur la sole 3 ou au travers de supports de cuisson 6, sans pour autant pénétrer dans l'enceinte 2 et modifier les conditions de cuisson des produits sur leur dessus.

Comme expliqué dans la partie introductive, la sole 3 peut être conçue mobile sous forme d'un plateau coulissant ou un tapis de cuisson approprié. Bien sûr, ce plateau mobile ou tapis de cuisson est lui-même conçu ajouré pour que cette sole réponde à la caractéristique de perméabilité selon l'invention.

Ce plateau ou ce tapis de cuisson s'étend par conséquent, dans le mode de réalisation décrit ci-dessus, au-dessus des glissières 8, lesquelles sont orientées sensiblement parallèlement au sens de déplacement de ce plateau ou de ce tapis. Toutefois, pour éviter une usure locale de ce dernier, lesdites glissières 8 peuvent être légèrement divergentes de part et d'autre d'un plan médian longitudinal 20 au four 1 et dans le sens de circulation du fluide, comme représenté de manière schématisée dans la figure 2.

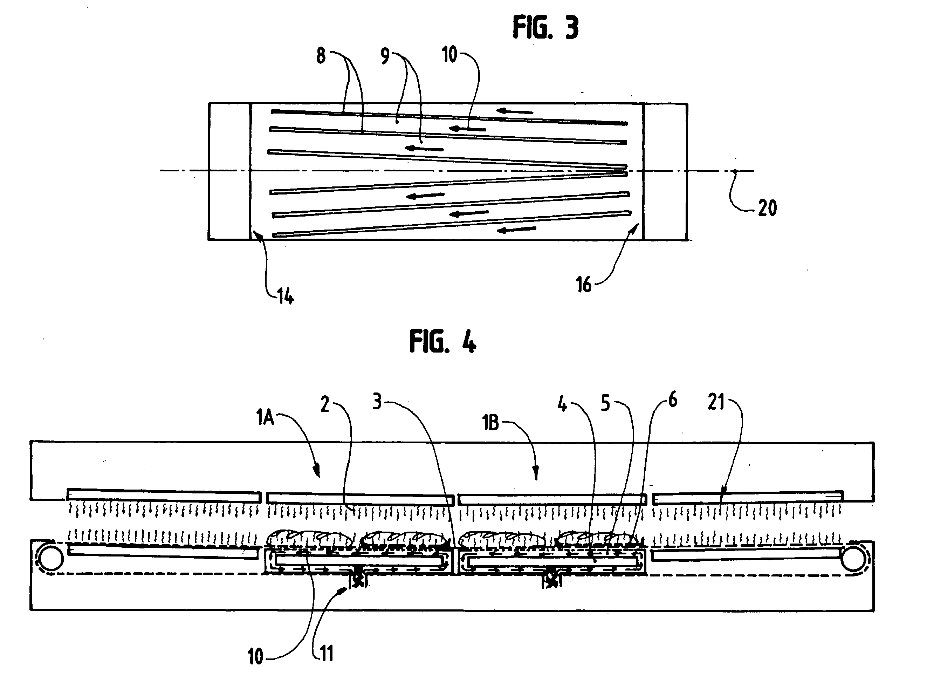

Par ailleurs, un tel four de cuisson 1, selon l'invention, peut définir un module. En d'autres termes, comme visible sur la figure 4, dans un dispositif de cuisson, par exemple de type tunnel, ce four 1 peut concevoir un tronçon du tunnel, de sorte que, seul sur une portion de ce dernier, la sole 3 peut recevoir, en complément, des moyens de chauffe par convexion comme décrit précédemment. La présente invention couvre également le cas où ce tunnel est constitué d'une juxtaposition de plusieurs modules 1A,1B correspondant à des fours de cuisson 1 selon l'invention.

Dans une telle configuration, il peut être choisi d'offrir ou non à la sole 3 un complément de chauffe par convexion dans un ou plusieurs modules 1A,1B par la mise en fonctionnement de leurs dispositifs de brassage 12 respectifs. Sur la figure 4, les moyens de brassage 12 du module 1A sont mis en fonctionnement alors que les moyens de brassage 12 du module 1B ne le sont pas.

Comme déjà indiqué précédemment, l'invention s'étend à tout type de four de cuisson, par exemple, et de façon non exhaustive, des fours tunnel à un ou plusieurs étages, des fours traditionnels ou des fours à sole mobile ou fixe.

## Revendications

1. Four de cuisson de produits de boulangerie, viennoiserie, pâtisserie ou analogue, comportant au moins une enceinte de cuisson (1) avec une sole (3) mobile ou fixe, sur laquelle reposent lesdits produits en cours de cuisson, soit directement soit au travers d'un support de cuisson (6) adapté, tel qu'une plaque, un filet ou un moule de cuisson, sous ladite sole (3) étant ménagés des moyens de chauffage par rayonnement de la sole, dits plaque chauffante de sole (4), de telle sorte qu'entre la sole (3) et la plaque chauffante de sole (4) est ménagé un espace (5) de circulation en circuit fermé de fluide de chauffage par convexion, ladite sole (3) étant conçue perméable pour un complément de chauffage par convection des produits, **caractérisé par le fait que** ledit fluide de chauffage par convexion lèche les produits au travers de ladite sole (3) sans pour autant pénétrer dans l'enceinte de cuisson (1).

2. Four de cuisson selon la revendication 1 **caractérisé en ce que** ladite sole (3) est conçue apte à être chauffée par rayonnement au travers de l'espace (5) de circulation de fluide de chauffage par convexion par la plaque chauffante de sole (4).

3. Four de cuisson selon l'une quelconque des revendications précédentes, **caractérisé en ce que** ladite sole (3) est définie par une plaque en tout ou partie ajourée ou par un tapis de cuisson, voire une grille ou un maillage, entretoisé par rapport à la plaque chauffante de sole (4).

4. Four de cuisson selon l'une quelconque des revendications précédentes, **caractérisé en ce que** ladite sole (3) est mobile.

5. Four de cuisson selon la revendication 4, **caractérisé en ce que** ladite sole (3), sous forme d'un tapis de cuisson, est supporté par le chant supérieur (7) de glissières (8) s'étendant au-dessus de la plaque chauffante de sole (4) en formant entretoise.

6. Four de cuisson selon la revendication 5, **caractérisé en ce que** lesdites glissières (8) définissent dans l'espace (5) des canaux de circulation (9) de fluide de chauffage par convexion.

7. Four de cuisson selon l'une quelconque des revendications précédentes, **caractérisé en ce qu'**il comporte des moyens de mise en circulation en circuit fermé (11) du fluide de chauffage par convexion dans ledit espace (5).

8. Four de cuisson selon la revendication 7, **caractérisé en ce que** lesdits moyens de mise en circulation (11) comportent un dispositif de brassage (12), des moyens de chauffage (4) dudit fluide et des moyens de canalisation (13) du fluide depuis une bouche d'aspiration (14), à une extrémité (15) de la sole (3), en direction d'une bouche de refoulement (16), à une extrémité opposée (17) de cette sole (3) en passant par ledit dispositif de brassage (12).

9. Four de cuisson selon la revendication 8, **caractérisé en ce que** lesdits moyens de chauffage du fluide sont constitués par la plaque chauffante de sole (4).

10. Four de cuisson selon les revendications 5 et 8, **caractérisé en ce que** lesdites glissières (8) s'étendent de manière continue ou discontinue depuis la bouche de refoulement (16) vers la bouche d'aspiration (14).

11. Four de cuisson selon l'une quelconque des revendications 5 à 10, **caractérisé en ce que** lesdites glissières (8) sont orientées sensiblement parallèlement au sens de déplacement de ladite sole (3) et sont légèrement divergentes de part et d'autre du plan médian longitudinal du four et dans le sens de circulation du fluide de chauffage par convexion.

12. Dispositif de cuisson constitué de plusieurs modules, chaque module comprenant une enceinte de cuisson (2), **caractérisé en ce qu'**au moins un des modules est constitué d'un four de cuisson (1) selon l'une quelconque des revendications précédentes.

## Claims

1. Baking oven for bread, patisserie and pastries or similar, including at least one baking chamber (1) with a movable or fixed sole (3) on which said products rest during baking, either directly or through a suitable baking support (6) such as a plate, a net or a baking mould, under said sole (3) being provided for radiating heating means for the sole, referred to as sole heating plate (4), so that a space (5) for circulation in closed circuit of convection heating fluid is provided for between the sole (3) and the sole heating plate (4), said sole (3) being designed pervious to an addition of convection heating for the products, wherein said convection heating fluid licks the products through said sole (3), without therefore penetrating into the baking chamber (1).

2. Baking oven according to claim 1, wherein said sole (3) is designed capable of being heated by radiation through the space (5) for circulation of the convection heating fluid through the sole heating plate (4).

3. Baking oven according to any of the preceding claims, wherein said sole (3) is defined by a fully or partly perforated plate or by a baking belt, even by a grid or a network, spaced apart with respect to the sole heating plate (4).

4. Baking oven according to any of the preceding claims, wherein said sole (3) is movable.

5. Baking oven according to claim 4, wherein said sole (3) in the form of a baking belt is supported by the upper edge (7) of slides (8) extending over the sole heating plate (4) while forming a spacer.

6. Baking oven according to claim 5, wherein said slides (8) define in the space (5) circulation channels (9) for the convection heating fluid.

7. Baking oven according to any of the preceding claims, including means for putting convection heating fluid into circulation in closed circuit (11) in said space (5).

8. Baking oven according to claim 7, wherein said means for putting into circulation (11) include a stirring device (12), means for heating (4) said fluid and means for conveying (13) fluid from a suction mouth (14) at one end (15) of the sole (3) towards a delivery mouth (16) at an opposite end (17) of this sole (3), while passing through said stirring device (12).

9. Baking oven according to claim 8, wherein said means for heating the fluid are formed by the sole heating plate (4).

10. Baking oven according to claims 5 and 8, wherein said slides (8) continuously or discontinuously extend from the delivery mouth (16) towards the suction mouth (14).

11. Baking oven according to any of the claims 5 to 10, wherein said slides (8) are oriented substantially parallel to the direction of displacement of said sole (3) and are slightly divergent on both sides of the longitudinal median plane of the oven and in the direction of circulation of the convection heating fluid.

12. Baking device formed by several modules, each module comprising a baking chamber (2), wherein at least one of the modules is formed of a baking oven (1) according to any of the preceding claims.

## Patentansprüche

1. Backofen für Brot, Backwaren, Feingebäck oder ähnliches, umfassend wenigstens eine Backkammer (1) mit einer beweglichen oder unbeweglichen Herdbodenplatte (3), auf der die besagten Produkte während des Backens entweder unmittelbar oder durch einen angepassten Backträger (6) wie eine Backplatte, ein Gitter oder eine Backform liegen, wobei unter der besagten Herdbodenplatte (3) Mittel zur Strahlungsheizung der Herdbodenplatte installiert seien, die als Heizplatte für die Herdbodenplatte (4) bezeichnet werden, derart, dass zwischen der Herdbodenplatte (3) und der Heizplatte der Herdbodenplatte (4) ein Raum (5) für den geschlossenen Umwälzkreislauf des Mediums zur Heizung durch Konvektion vorgesehen sei, wobei die besagte Herdbodenplatte (3) durchlassend vorgesehen sei für eine ergänzende Konvektionsheizung der Produkte, **dadurch gekennzeichnet, dass** das besagte Medium zur Heizung durch Konvektion die Produkte durch die besagte Herdbodenplatte (3) züngelt, ohne trotzdem in die Backkammer (1) einzudringen.

2. Backofen nach Anspruch 1, **dadurch gekennzeichnet, dass** die besagte Herdbodenplatte (3) geeignet vorgesehen ist, um durch Strahlung durch den Raum (5) für den Umlauf des Mediums zur Heizung durch Konvektion über die Heizplatte der Herdbodenplatte (4) geheizt zu werden.

3. Backofen nach irgendeinem der vorgehenden Ansprüche, **dadurch gekennzeichnet, dass** die besagte Herdbodenplatte (3) durch eine gänzlich oder teilweise durchlöcherte Backplatte oder durch ein Backband, ja sogar durch einen Gitterrost oder ein Maschengewebe, beabstandet hinsichtlich der Heizplatte der Herdbodenplatte (4), gebildet ist.

4. Backofen nach irgendeinem der vorgehenden Ansprüche, **dadurch gekennzeichnet, dass** die besagte Herdbodenplatte (3) beweglich ist.

5. Backofen nach Anspruch 4, **dadurch gekennzeichnet, dass** die besagte Herdbodenplatte (3) in Form von einem Backband durch die obere Kante (7) von sich über der Heizplatte der Herdbodenplatte (4) erstreckenden, einen Steg bildenden Gleitschienen (8) getragen ist.

6. Backofen nach Anspruch 5, **dadurch gekennzeichnet, dass** die besagten Gleitschienen (8) in dem Raum (5) Kanalwege für den Umlauf (9) des Mediums zur Heizung durch Konvektion bilden.

7. Backofen nach irgendeinem der vorgehenden Ansprüche, **dadurch gekennzeichnet, dass** er Mittel zum Setzen in Umlauf in geschlossenem Umwälzkreislauf (11) des Mediums zur Heizung durch Konvektion in dem besagten Raum (5) umfasst.

8. Backofen nach Anspruch 7, **dadurch gekennzeichnet, dass** die besagten Mittel zum in Umlaufsetzen (11) eine Vorrichtung zur Durchwirbelung (12), Mittel zur Heizung (4) des besagten Mediums und Mittel zum Leiten (13) des Mediums von einer Saugmündung (14) an einem Ende (15) der Herdbodenplatte (3) in Richtung einer Austrittsmündung (16) an einem entgegengesetzten Ende (17) dieser Herdbodenplatte (3), während es durch die besagte Durchwirbelungsvorrichtung (12) strömt, umfassen.

9. Backofen nach Anspruch 8, **dadurch gekennzeichnet, dass** die besagten Mittel zur Heizung des Mediums durch die Heizplatte der Herdbodenplatte (4) gebildet sind.

10. Backofen nach Ansprüchen 5 und 8, **dadurch gekennzeichnet, dass** die besagten Gleitschienen (8) sich auf stetige oder unstetige Art und Weise von der Austrittsmündung (16) in Richtung auf die Saugmündung (14) erstrecken.

11. Backofen nach irgendeinem der Ansprüche 5 bis 10, **dadurch gekennzeichnet, dass** die besagten Gleitschienen (8) im Wesentlichen parallel zur Bewegungsrichtung der besagten Herdbodenplatte (3) gerichtet sind und beiderseits von der Mittellängsebene des Ofens und in der Umlaufrichtung des Mediums zur Heizung durch Konvektion leicht auseinander gehend sind.

12. Backvorrichtung, bestehend aus mehreren Modulen, wobei jedes Modul eine Backkammer (2) umfasst, **dadurch gekennzeichnet, dass** wenigstens das eine von den Modulen aus einem Backofen (1) nach irgendeinem der vorgehenden Ansprüche besteht.
